# EUROPEAN PATENT SPECIFICATION

(11) **EP 2 342 912 B1**
(45) Date of publication and mention of the grant of the patent: **27.05.2020**
(21) Application number: 08877593.7
(22) Date of filing: 23.10.2008
(51) Int. Cl.: H04W 52/02, H04W 76/27

(54) **COMMUNICATION SYSTEM AND METHOD**
KOMMUNIKATIONSSYSTEM UND VERFAHREN
SYSTÈME ET PROCÉDÉ DE COMMUNICATION

(43) Date of publication of application: 13.07.2011
(73) Proprietor: Telefonaktiebolaget LM Ericsson (publ), 164 83 Stockholm (SE)
(72) Inventor: OLOFSSON, Håkan, S-118 42 Stockholm (SE); PERSSON, Fredrik, S-195 45 Märsta (SE); SINTORN, Mathias, S-191 41 Sollentuna (SE); VOIGT, Lotta, S-167 71 Bromma (SE)
(74) Representative: Brann AB
(86) International application number: PCT/SE2008/051203
(87) International publication number: WO 2010/047630

(56) References cited:
- EP-A1- 1 798 998
- WO-A1-02/39775
- WO-A1-03/096730
- WO-A1-2008/115108
- US-A1- 2004 017 795
- US-A1- 2008 039 032
- US-A1- 2008 181 127
- US-A1- 2008 232 310
- US-B1- 6 347 091
- SIEMENS: "3GPP TSG-RAN WG2#55; R2-062819; Seoul, Korea, 9th ? 13th October 2006 ; Agenda item: 13.2 Title: Adaptive DRX and DTX Setting for LTE_ACTIVE", INTERNET CITATION, 13 October 2006 (2006-10-13), XP002434319, Retrieved from the Internet: URL:http://www.3gpp.org/ftp/tsg_ran/WG2_RL 2/TSGR2_55/Documents [retrieved on 2007-05-21]
- FLORIAN LIERS ET AL: 'UMTS Data Capacity Improvements Employing Dynamic RRC Timeouts', [Online] 2005, pages 2186 - 2188, XP010928081 Retrieved from the Internet: <URL:ieeexplore.ieee.org/ie15/10989/34629/0 1651833.pdf?arnumber=1651833> [retrieved on 2009-05-25]
- JUI-HUNG YEH ET AL: 'Performance Analysis of Energy Consumption in 3GPP Networks', [Online] 2004, XP031034522 Retrieved from the Internet: <URL:ieeexplore.ieee.org/iel5/9227/29245/01 319559.pdf?arnumber=1319559> [retrieved on 2009-05-19]

## Description

### Technical Field

The invention relates to a communication system and method, and in particular to a communication system and method in which a radio access network configuration is adaptively controlled, for example based on a pattern in the flow of traffic.

### Background

In a typical communication network or system there can exist a number of operating parameters or settings that are set in advance, for example by a network element such as a control node controlling the operation of the communication network or system.

For example, in the configuration of a communication network a timer setting or threshold value can have a default value which is chosen as a compromise, or best fit, according to a number of factors.

While the configuration of a communication network works in a satisfactory manner using these general settings or parameters, it will be appreciated that these default values lead to a situation where the communication network does not always operate as efficiently as possible.

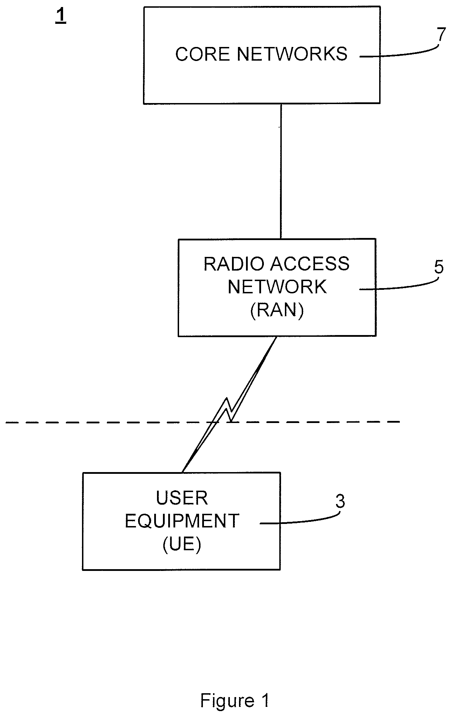

Figure 1 shows an example of a communication system 1, such as the Universal Mobile Telecommunications System (UMTS) defined under the 3GPP specification. A simplified architecture for a UMTS system as illustrated in Figure 1 includes a user equipment (UE) 3 which communicates over an air/radio interface with a radio access network (RAN) 5, sometimes referred to as an Universal Terrestrial Radio Access Network (UTRAN) or Evolved Universal Terrestrial Radio Access Network (E-UTRAN). The RAN 5 communicates with one or more core networks 7.

The RAN 5 consists of entities (both physical and software) that manage the radio resources in the communication system 1, and provides a UE 3 with a mechanism to access the core networks 7. The configuration of a RAN 5 is an important aspect of a communication system 1, since it can affect the performance and service quality parameters of the communication system.

The protocol architecture of a RAN 5 comprises a number of layers, including an application layer, a transport layer, a radio resource control (RRC) layer, a link layer, and a physical layer.

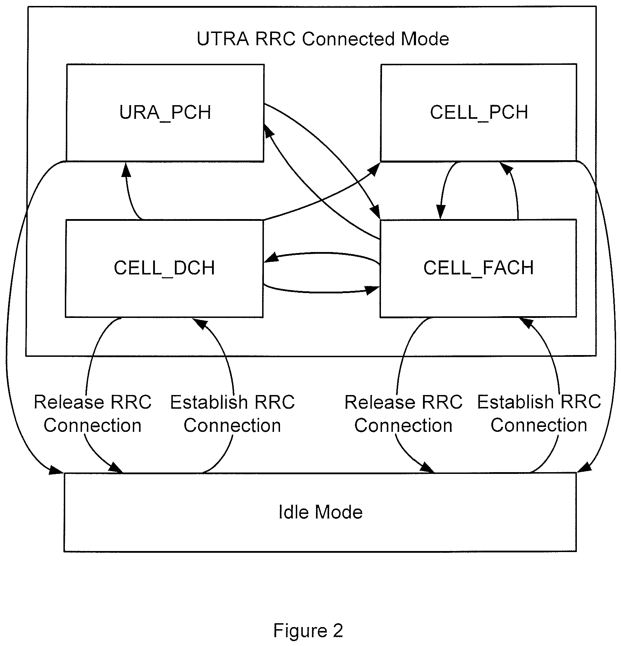

Figure 2 depicts the various states and state transitions of a RRC layer, for example UTRA RRC states and state transitions, as defined in the 3GPP TS 25.331, RRC protocol specification. Based on user activity, a UE 3 is assigned to different states. Depending on the current state of a UE 3, the UE is assigned different resources, which should preferably match the bandwidth requirements of the UE 3.

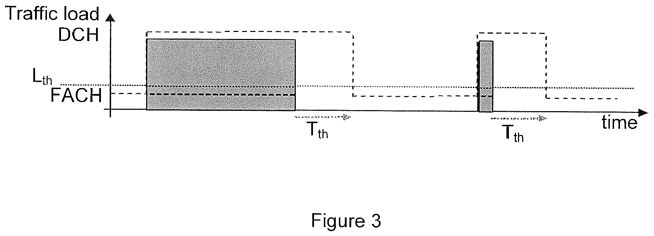

To determine user activity, user parameters such as "throughput" and "buffer load" are measured in order to detect silent and active periods. For example, a certain amount of buffer load can be used as an indication of user activity. Likewise, a lack of throughput for a certain amount of time can be used as an indication of user inactivity. These are shown for a UTRAN system in Figure 3, where *Lₜₕ* relates to the traffic load threshold for determining a transition from the state CELL_FACH to the state CELL_DCH of Figure 2, and *Tₜₕ* relates to an inactivity timer for transition from the state CELL_DCH to the state CELL_FACH.

The parameters *Lₜₕ* and *Tₜₕ* may be default values set by the system, such that a UE 3 connected to the RAN 5 will change RCC states according to a particular traffic load or period of inactivity.

Another feature commonly used in communication systems is the Discontinuous Reception (DRX) mode of operation in a UE 3, meaning that the UE 3 can turn off its receiver during certain periods to reduce power consumption in the UE 3. The DRX mode of operation is configurable from a remote node, such as a basestation. For example, in a Long Term Evolution (LTE) communication system, the eNB (evolved NodeB) can configure the DRX mode of operation using the RRC protocol. It will be appreciated that the efficiency of the DRX scheme depends on its configuration in relation to actual traffic behavior.

As an example of its implementation, the following definitions apply to DRX in an E-UTRAN communication system, as defined in specification 3GPP TS 36.300 Evolved Universal Terrestrial Radio Access (E-UTRA) and Evolved Universal Terrestrial Radio Access Network (E-UTRAN).

The parameter "**on-duration**" is the duration in downlink subframes that the UE 3 waits for, after waking up from DRX, to receive a physical downlink control channel (PDCCH). If the UE 3 successfully decodes a PDCCH, the UE stays awake and starts an inactivity timer.

The parameter "**inactivity-timer**" is the duration in downlink subframes (during wake time) that the UE 3 waits to successfully decode a PDCCH, from the last successful decoding of a PDCCH, failing which it re-enters DRX. The UE 3 shall restart the inactivity timer following a single successful decoding of a PDCCH for a first transmission only (i.e. not for retransmissions).

The parameter "**active-time**" is the total duration that the UE 3 is awake. This includes the "on-duration" of the DRX cycle, the time UE is performing continuous reception while the inactivity timer has not expired and the time the UE is performing continuous reception while waiting for a DL retransmission after one HARQ RTT. Based on the above the minimum active time is of length equal to on-duration, and the maximum is undefined (infinite).

Of the above parameters the on-duration and inactivity-timer are of fixed lengths (having been set as default values), while the active-time parameter is of varying length based on scheduling decisions and UE decoding success. Only the on-duration and inactivity-timer duration are signalled to the UE by the eNB.

Characteristics of packet data traffic, and thereby user activity, vary significantly between different applications. As a consequence, a general configuration, for example the setting of timers and thresholds for buffer load and throughput, is therefore difficult to identify, and will always be a compromise between the characteristics caused by many different applications. In other words, the general setting of these parameters leads to a disadvantageous situation whereby a UE will not be assigned to the most appropriate RRC state or DTX configuration. It is noted that this disadvantage is not only dependent on the applications being used, but also other factors such as transport network congestion, or traffic shaping nodes.

US Publication No. 2008/232310 A1 describes methods, devices, and systems adapted to enable an eNodeB and a User Equipment (UE) to negotiate a set of DRX parameters. In this regard, a UE-specific set of DRX parameters are updated when new traffic to the UE is added or removed. International Publication No. WO 2008/115108 A1 relates to a method and system for improved state switching in a User Equipment (UE) in a wireless access network. In this regard, number of data packets sent to or from the UE are analysed to check if the UE should be transferred from one state to another.

SIEMENS: "3GPP TSG-RAN W02#55; R2-062819; Seoul, Korea, 9th - 13th October 2006; Agenda item: 13.2 Title: Adaptive DRX and DTX Setting for LTE ACTIVE", INTERNET CITATION, 13 October 2006 (2006-10-13), XP002434319, describes adaptive Discontinuous Reception (DRX) in a User Equipment (UE) which discloses dynamic optimisation of DRX cycle lengths. Measurement of a packet arrival rate estimates idle periods between packets and is used to set the DRX cycle lengths.

It is an aim of the present invention to provide a RAN configuration that does not suffer from one or more of the disadvantages mentioned above.

### Summary

In accordance with the invention, the aforementioned objectives are accomplished by the method of claim 1 and the network element of claim 8.

According to a first aspect of the invention, there is provided a method of configuring a radio access network for a particular user. The method comprises the steps of monitoring a flow of traffic for the user; detecting a pattern in the flow of traffic; and adapting an operating parameter of the radio access network based on the detected pattern. The step of detecting the pattern in the flow of traffic comprises detecting a behaviour pattern specific to a particular application, or a combination of two or more applications, used by the particular user.

By adapting an operating parameter in this way, it is possible to enable better utilization of resources and/or better user performance. These include, but are not limited to, reducing the power consumption of the user equipment, or enabling a user equipment to switch to a correct operating state in a more efficient manner.

According to further aspects of the invention, there are provided a network element configured to perform the method, and a communications system comprising one or more such network elements.

### Brief description of the drawings

For a better understanding of the present invention, and to show more clearly how it may be carried into effect, reference will now be made, by way of example only, to the following drawings in which:
Figure 1 shows a basic communication system;
Figure 2 shows an overview of UTRA RRC states and state transitions;
Figure 3 shows state transitions based on buffer load and time with no throughput;
Figure 4 shows a flowchart describing a method according to a first aspect of the present invention;
Figure 5 shows the application of the invention according to a first embodiment;
Figure 6 shows the application of the invention according to a second embodiment; and
Figure 7 shows the application of the invention according to a third embodiment.

### Detailed description

The preferred embodiments will be described in relation to a RAN used in a UMTS or SAE/LTE communication system. However, it is noted that the invention may be used with any RAN associated with any type of communication system.

The invention is focused on using the temporal traffic behaviour of a communication session to control one or more settings or parameters of the radio access network configuration.

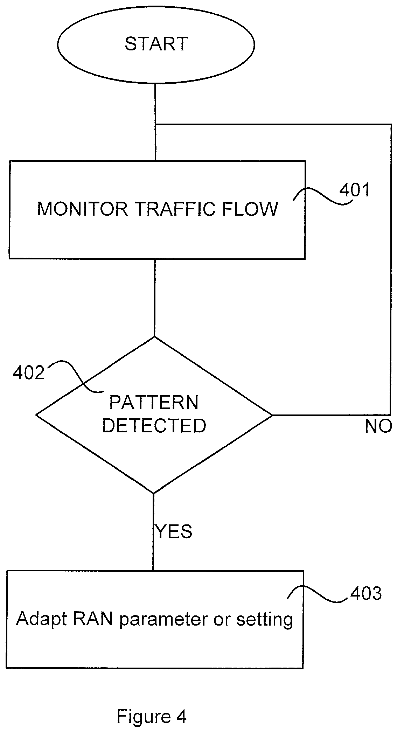

Referring to Figure 4, in its broadest sense the invention comprises the step of monitoring the flow of traffic for a particular user, step 401. In step 402, if a pattern is detected as a result of the monitoring step, one or more operating parameters or settings of the radio access network are adapted, step 403, based on the detected pattern. If no pattern is detected, the method continues to monitor the flow of traffic on an ongoing basis in order to detect a pattern. As will be described in greater detail below, the invention can be configured to detect a particular pattern in the flow of traffic corresponding to a particular application, or a combination of two or more applications being used concurrently by the user.

To help illustrate the invention further, the description below will be made with reference to first and second applications of the invention. However, it will be appreciated that the invention is not limited to these applications, and can be used with any other application.

According to a first embodiment, one or more settings or parameters of a RAN in a wideband code division multiple access (WCDMA) communications network are configured according to a pattern detected in the flow of traffic. For example, one or more timers and/or threshold values for throughput and buffer load may be adapted in the WCDMA communications network, enabling a UE to be switched to the correct state in an efficient manner.

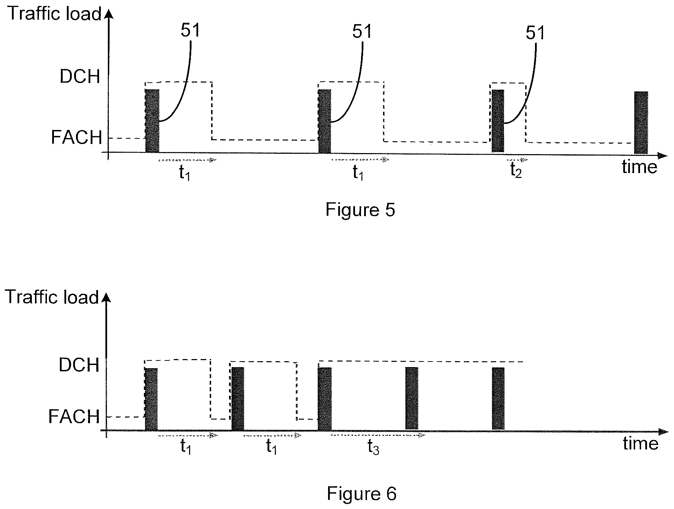

With reference to Figures 5, 6 and 7, the following examples illustrate the application of the invention with WCDMA RRC state transitions.

In Figure 5 there is shown a flow of traffic having large bursts of traffic load 51, with long periods of inactivity between the bursts 51. The RAN is initially configured (for example by a default setting) such that the inactivity timer is set to a time t₁. This means that the UE will move from the state CELL_DCH to the state CELL_FACH after a period of inactivity corresponding to time t₁. However, according to the invention, after detecting this pattern of large bursts of traffic load with long periods of inactivity, the value of the inactivity timer is reduced to time t₂, such that the time taken until the state is changed is also reduced.

Since it is known that, as soon as no activity has been detected there will not be any activity for some time, the inactivity timer can therefore be decreased to a minimum value, time t₂. This enables the RAN to release resources that are assigned to the UE by changing from the state CELL_DCH to the state CELL_FACH more quickly.

Figure 6 shows another example, whereby the flow of traffic has a characteristic such that there are large bursts of traffic load, whereby the time between bursts is just longer than the default setting of the inactivity timer t₁. This means that, just after changing from the state CELL_DCH to the state CELL_FACH after a period of inactivity, the UE must again change back to the CELL_DCH state within a very short period of time. Upon detecting this pattern, the invention adapts the RAN configuration by increasing the inactivity timer slightly to a time t₃, thereby preventing unnecessary switching between the CELL_DCH and CELL_FACH states prior to the next burst of traffic.

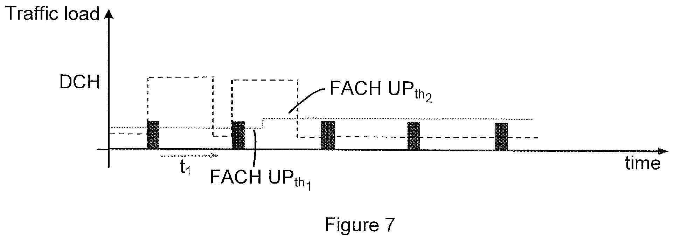

In Figure 7 there is shown a flow of traffic having characteristics such that small bursts of traffic load, just larger than the up-switch threshold UPₜₕ₁ are present. This means that the UE will change from the CELL_FACH state to the CELL_DCH state when the traffic load crosses the up-switch threshold UPₜₕ₁, and remain in the CELL_DCH state until the inactivity timer has timed out after time t₁. It will be appreciated that this change of states is not efficient when considering that the traffic load has only just exceeded the up-switch threshold UPₜₕ₁.

Thus, according to the invention, upon detecting this pattern in the flow of traffic, the invention increases the up-switch threshold UPₜₕ₁ by a certain value, for example to a new up-switch threshold UPₜₕ₂, such that the UE does not switch unnecessarily from the CELL_FACH state to the CELL_DCH state. As a result, radio resources and battery power can be saved by avoiding unnecessary up-switches to the CELL_DCH state.

The invention has the advantage of lower power consumption, better resource utilization and/or better user performance by allowing the actual state to follow the traffic characteristics more accurately, and avoiding unnecessary state transitions.

It is noted that the flow of traffic for a given user may be monitored by actively measuring the traffic in the RAN. The traffic measured in the RAN can either be a specific flow or an aggregate of all traffic belonging to a specific user, with the traffic characteristics dependent on all transmission bottlenecks from the sending client/server to the measurement point. As such, the measured characteristics may differ substantially from the original traffic characteristics at the sending side, but reflect more accurately the traffic affecting the operation of the RAN. This form of measurement may be achieved by measuring the traffic in the network node that terminates the protocol layer implementing the state machine. For example, in a WCDMA communications network, this corresponds to the radio network controller (RNC). The measurement of traffic may be carried out by measuring the amount of data in a data buffer. It will be appreciated, however, that the traffic can be measured in other nodes or in other ways, without departing from the scope of the invention. For example, the traffic can be measured according to the intensity of the packet flow, the peak rate of the packet flow and/or the amount of data in a buffer.

These measurements are thereafter used as described above to adapt RRC state transitions in the UMTS communications network during a communication session on a per user basis to ensure low power consumption or that a user is switched to the correct state in a more efficient way, respectively.

It will be appreciated that the invention can be used with other settings or parameters to those shown in Figures 5 to 7, and in relation to the detection of other patterns in the traffic.

According to a second embodiment, one or more settings or parameters are adapted in a discontinuous reception (DRX) mode of operation in a LTE communication network. The traffic characteristics are measured actively in the RAN. Preferably, as described above in relation to the first embodiment, the traffic measured in the RAN is an aggregate of all traffic belonging to a specific user, and the traffic characteristics depend on all transmission bottlenecks from the sending client/server to the measurement point. Therefore the measured characteristics may differ substantially from the original traffic characteristics at the sending side. The traffic may be measured in the network node terminating the protocol layer implementing the state machine. For example, in a LTE network this corresponds to the eNB.

The measurements are thereafter used to adapt one or more settings or parameters of the DRX mode of operation in LTE communication network. For example, in the DRX mode of operation of a LTE communications network, the standardized parameters to be configured include the "on-duration" and/or the "inactivity-timer" described above. These parameters manage how fast the UE falls to sleep after being woken up.

The on-duration is the duration in downlink subframes that the UE waits for, after waking up from DRX, to receive a physical downlink control channel (PDCCH). If the UE successfully decodes a PDCCH, the UE stays awake and starts an inactivity timer.

The inactivity-timer is the duration in downlink subframes (during wake time) that the UE waits to successfully decode a PDCCH, from the last successful decoding of a PDCCH, failing which it re-enters DRX. The UE restarts the inactivity timer following a single successful decoding of a PDCCH for a first transmission only (i.e. not for retransmissions).

By adapting the settings or parameters in the way described by the invention, the power consumption of the user equipment can be lowered, or the user switched to a correct state in a more efficient manner. Furthermore, the invention enables a better utilization of resources and/or better user performance.

It can be see from the above that the invention makes use of fact that user activity created by certain applications has a repetitive pattern (i.e. periodic), which is used to better predict future periods of user activity and inactivity. By actively measuring the traffic characteristics, the configuration of the RAN is dynamically adapted during a communication session on a per UE basis to ensure better resource utilization and/or user performance.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

## Claims

1. A method of configuring a radio access network (5) for a user, by a network element, the method comprising the steps of:
monitoring (401) a flow of traffic associated with the user;
detecting (402) a temporal pattern in the monitored flow of traffic, by measuring the traffic in the network element that terminates a protocol layer implementing a state machine;
predicting, based on the detected temporal pattern, future periods of user activity and inactivity corresponding to an application or a combination of two or more applications; and
adapting (403) an operating parameter of the radio access network (5) based on the predicted future periods of user activity and inactivity, wherein the step of adapting (403) the operating parameter of the radio access network (5) comprises changing a threshold value of the operating parameter of the radio access network (5) on a per user basis, to enable a user equipment, UE (3), to switch between first and second radio resource control states, and
wherein the step of detecting (402) the temporal pattern in the monitored flow of traffic comprises detecting a particular pattern comprising bursts of traffic load in the monitored flow of traffic corresponding to the combination of two or more applications, concurrently used by the user.

2. A method as claimed in claim 1, wherein the step of monitoring (401) the flow of traffic comprises the step of measuring the flow of traffic in the radio access network (5).

3. A method as claimed in claim 1 or 2, wherein the step of monitoring (401) the flow of traffic comprises the step of measuring an aggregate of all traffic for the user.

4. A method as claimed in claim 2 or 3, wherein the flow of traffic is actively measured according to an intensity of a packet flow, a peak rate of the packet flow, and/or an amount of data in a buffer, during a communication session.

5. A method as claimed in any one of claims 1 to 4, wherein the step of detecting (402) the temporal pattern in the monitored flow of traffic further comprises the step of detecting a periodic pattern in the monitored flow of traffic.

6. A method as claimed in any one of claims 1 to 5, wherein the step of adapting (403) the operating parameter of the radio access network (5) further comprises the step of changing a timer setting, and wherein the timer setting relates to an on-duration setting, inactivity-timer setting, and active-time setting of a discontinuous reception mode of operation in a Long Term Evolution, LTE, communications network, or inactivity-timer setting of a Wideband Code Division Multiple Access, WCDMA, communications network.

7. A method as claimed in any one of claims 1 to 6, wherein the step of adapting (403) is performed dynamically.

8. A network element for configuring a radio access network (5) for a user, the network element comprising:
monitoring means for monitoring (401) a flow of traffic associated with the user;
detecting means for detecting (402) a temporal pattern in the monitored flow of traffic, by measuring the traffic in the network element that terminates a protocol layer implementing a state machine;
predicting means for predicting, based on the detected temporal pattern, future periods of user activity and inactivity corresponding to an application or a combination of two or more applications; and
adapting means for adapting (403) an operating parameter of the radio access network (5) based on the predicted future periods of user activity and inactivity, wherein the adapting means adapts the operation parameter of the radio access network (5) by changing a threshold value of the operating parameter in the radio access network (5) on a per user basis, to enable a user equipment, UE (3), to switch between first and second radio resource control states, and
wherein the detecting means, for detecting (402) the temporal pattern in the monitored flow of traffic, is adapted to detect a particular pattern comprising bursts of traffic load in the monitored flow of traffic corresponding to the combination of two or more applications, concurrently used by the user.

9. A network element as claimed in claim 8, wherein the monitoring means is adapted to measure the flow of traffic in the radio access network (5), or an aggregate of all traffic for the user.

10. A network element as claimed in claim 8 or 9, wherein the monitoring means is adapted to actively measure the flow of traffic according to an intensity of a packet flow, a peak rate of the packet flow, and/or an amount of data in a buffer, during a communication session.

11. A network element as claimed in any one of claims 8 to 10, wherein the detecting means is further adapted to detect a periodic pattern in the monitored flow of traffic.

12. A network element as claimed in any one of claims 8 to 11, wherein the adapting means is configured to adapt a timer setting of the radio access network (5), and wherein the timer setting relates to an on-duration setting, inactivity-timer setting, and active-time setting of a discontinuous reception mode of operation in a Long Term Evolution, LTE, communications network, or inactivity-timer setting of a Wideband Code Division Multiple Access, WCDMA, communications network.

13. A network element as claimed in any one of claims 8 to 12, wherein the network element is a radio network controller, RNC, of the WCDMA communications network or an evolved NodeB, eNB, in the LTE communications network.

14. A communications system (1) comprising a network element as claimed in any one of claims 8 to 13.

## Patentansprüche

1. Verfahren zum Konfigurieren eines Funkzugangsnetzwerks (5) für einen Benutzer durch ein Netzwerkelement, wobei das Verfahren folgende Schritte umfasst:
Überwachen (401) eines Verkehrsflusses, der zu dem Benutzer gehört;
Detektieren (402) eines zeitlichen Musters in dem überwachten Verkehrsfluss durch Messen des Verkehrs in dem Netzwerkelement, das eine Protokollschicht beendet, die eine Zustandsmaschine umsetzt;
Vorhersagen, basierend auf dem detektierten zeitlichen Muster, von zukünftigen Perioden von Benutzeraktivität und -inaktivität, die einer Anwendung oder einer Kombination von zwei oder mehreren Anwendungen entsprechen; und
Anpassen (403) eines Betriebsparameters des Funkzugangsnetzwerks (5) basierend auf den vorhergesagten zukünftigen Perioden von Benutzeraktivität und -inaktivität, wobei der Schritt des Anpassens (403) des Betriebsparameters des Funkzugangsnetzwerks (5) das Ändern eines Schwellenwertes des Betriebsparameters des Funkzugangsnetzwerks (5) pro Benutzer umfasst, um es einem Endgerät, UE (3), zu ermöglichen, zwischen ersten und zweiten Funkressourcensteuerzuständen zu wechseln, und
wobei der Schritt des Detektierens (402) des zeitlichen Musters in dem überwachten Verkehrsfluss das Detektieren eines bestimmten Musters umfasst, das Stöße der Verkehrslast in dem überwachten Verkehrsfluss umfasst, die der Kombination von zwei oder mehreren Anwendungen entsprechen, die der Benutzer gleichzeitig verwendet.

2. Verfahren nach Anspruch 1, wobei der Schritt des Überwachens (401) des Verkehrsflusses den Schritt des Messens des Verkehrsflusses in dem Funkzugangsnetzwerk (5) umfasst.

3. Verfahren nach Anspruch 1 oder 2, wobei der Schritt des Messens (401) des Verkehrsflusses den Schritt des Messens einer Gesamtsumme des gesamten Verkehrs für den Benutzer umfasst.

4. Verfahren nach Anspruch 2 oder 3, wobei der Verkehrsfluss gemäß einer Intensität eines Paketflusses, einer Spitzenrate des Paketflusses und/oder einer Datenmenge in einem Puffer während einer Kommunikationssitzung aktiv gemessen wird.

5. Verfahren nach einem der Ansprüche 1 bis 4, wobei der Schritt des Detektierens (402) des zeitlichen Musters in dem überwachten Verkehrsfluss ferner den Schritt des Detektierens eines periodischen Musters in dem überwachten Verkehrsfluss umfasst.

6. Verfahren nach einem der Ansprüche 1 bis 5, wobei der Schritt des Anpassens (403) des Betriebsparameters des Funkzugangsnetzwerks (5) ferner den Schritt des Änderns einer Zeitgebereinstellung umfasst, und wobei die Zeitgebereinstellung eine Einschaltdauereinstellung, eine Inaktivitätszeitgebereinstellung und eine aktive Zeiteinstellung eines diskontinuierlichen Empfangsbetriebsmodus in einem LTE- ("Long Term Evolution") Kommunikationsnetzwerk oder eine Inaktivitätszeitgebereinstellung eines Kommunikationsnetzwerks mit Breitband-Codemultiplex-Vielfachzugriff, WCDMA, betrifft.

7. Verfahren nach einem der Ansprüche 1 bis 6, wobei der Schritt des Anpassens (403) dynamisch ausgeführt wird.

8. Netzwerkelement zum Konfigurieren eines Funkzugangsnetzwerks (5) für einen Benutzer, wobei das Netzwerkelement Folgendes umfasst:
Überwachungsmittel zum Überwachen (401) eines Verkehrsflusses, der zu dem Benutzer gehört;
Detektionsmittel zum Detektieren (402) eines zeitlichen Musters in dem überwachten Verkehrsfluss durch Messen des Verkehrs in dem Netzwerkelement, das eine Protokollschicht beendet, die eine Zustandsmaschine umsetzt;
Vorhersagemittel zum Vorhersagen, basierend auf dem detektierten zeitlichen Muster, von zukünftigen Perioden von Benutzeraktivität und -inaktivität, die einer Anwendung oder einer Kombination von zwei oder mehreren Anwendungen entsprechen; und
Anpassungsmittel zum Anpassen (403) eines Betriebsparameters des Funkzugangsnetzwerks (5) basierend auf den vorhergesagten zukünftigen Perioden von Benutzeraktivität und -inaktivität, wobei die Anpassungsmittel den Betriebsparameter des Funkzugangsnetzwerks (5) durch Ändern eines Schwellenwertes des Betriebsparameters in dem Funkzugangsnetzwerk (5) pro Benutzer anpasst, um es einem Endgerät, UE (3), zu ermöglichen, zwischen ersten und zweiten Funkressourcensteuerzuständen zu wechseln, und
wobei die Detektionsmittel zum Detektieren (402) des zeitlichen Musters in dem überwachten Verkehrsfluss angepasst sind, um ein bestimmtes Muster zu detektieren, das Stöße der Verkehrslast in dem überwachten Verkehrsfluss umfasst, die der Kombination von zwei oder mehreren Anwendungen entsprechen, die von dem Benutzer gleichzeitig verwendet werden.

9. Netzwerkelement nach Anspruch 8, wobei die Überwachungsmittel geeignet sind, um den Verkehrsfluss in dem Funkzugangsnetzwerk (5) oder eine Gesamtsumme des gesamten Verkehrs für den Benutzer zu messen.

10. Netzwerkelement nach Anspruch 8 oder 9, wobei die Überwachungsmittel geeignet sind, um den Verkehrsfluss gemäß einer Intensität eines Paketflusses, einer Spitzenrate des Paketflusses und/oder einer Datenmenge in einem Puffer während einer Kommunikationssitzung aktiv zu messen.

11. Netzwerkelement nach einem der Ansprüche 8 bis 10, wobei die Detektionsmittel ferner geeignet sind, um ein periodisches Muster in dem überwachten Verkehrsfluss zu detektieren.

12. Netzwerkelement nach einem der Ansprüche 8 bis 11, wobei die Anpassungsmittel konfiguriert sind, um eine Zeitgebereinstellung des Funkzugangsnetzwerks (5) anzupassen, und wobei die Zeitgebereinstellung eine Einschaltdauereinstellung, eine Inaktivitätszeitgebereinstellung und eine aktive Zeiteinstellung eines diskontinuierlichen Empfangsbetriebsmodus in einem LTE- ("Long Term Evolution") Kommunikationsnetzwerk oder eine Inaktivitätszeitgebereinstellung eines Kommunikationsnetzwerks mit Breitband-Codemultiplex-Vielfachzugriff, WCDMA, betrifft.

13. Netzwerkelement nach einem der Ansprüche 8 bis 12, wobei das Netzwerkelement eine Funknetzwerksteuereinrichtung, RNC, des WCDMA-Kommunikationsnetzwerks oder ein Evolved-NodeB, eNB, in dem LTE-Kommunikationsnetzwerk ist.

14. Kommunikationssystem (1), umfassend ein Netzwerkelement nach einem der Ansprüche 8 bis 13.

## Revendications

1. Procédé de configuration d'un réseau d'accès radio (5) pour un utilisateur, par un élément de réseau, le procédé comprenant les étapes :
de surveillance (401) d'un flux de trafic associé à l'utilisateur ;
de détection (402) d'un modèle temporel dans le flux de trafic surveillé, en mesurant le trafic dans l'élément de réseau qui termine une couche de protocole mettant en œuvre une machine d'état ;
de prédiction, sur la base du modèle temporel détecté, de périodes futures d'activité et d'inactivité de l'utilisateur correspondant à une application ou à une combinaison de deux ou plusieurs applications ; et
d'adaptation (403) d'un paramètre de fonctionnement du réseau d'accès radio (5) sur la base des périodes futures prédites d'activité et d'inactivité de l'utilisateur, dans lequel l'étape d'adaptation (403) du paramètre de fonctionnement du réseau d'accès radio (5) comprend la modification d'une valeur seuil du paramètre de fonctionnement du réseau d'accès radio (5) sur une base par utilisateur, pour permettre à un équipement utilisateur, UE (3), de basculer entre des premier et second états de commande de ressources radio, et
dans lequel l'étape de détection (402) du modèle temporel dans le flux de trafic surveillé comprend la détection d'un modèle particulier comprenant des salves de charge de trafic dans le flux de trafic surveillé correspondant à la combinaison de deux applications ou plus, utilisées simultanément par l'utilisateur.

2. Procédé selon la revendication 1, dans lequel l'étape de surveillance (401) du flux de trafic comprend l'étape de mesure du flux de trafic dans le réseau d'accès radio (5).

3. Procédé selon la revendication 1 ou 2, dans lequel l'étape de surveillance (401) du flux de trafic comprend l'étape de mesure d'un agrégat de l'ensemble du trafic pour l'utilisateur.

4. Procédé selon la revendication 2 ou 3, dans lequel le flux de trafic est activement mesuré en fonction d'une intensité d'un flux de paquets, d'un débit de pointe du flux de paquets et/ou d'une quantité de données dans un tampon, pendant une session de communication.

5. Procédé selon l'une quelconque des revendications 1 à 4, dans lequel l'étape de détection (402) du modèle temporel dans le flux de trafic surveillé comprend en outre l'étape de détection d'un modèle périodique dans le flux de trafic surveillé.

6. Procédé selon l'une quelconque des revendications 1 à 5, dans lequel l'étape d'adaptation (403) du paramètre de fonctionnement du réseau d'accès radio (5) comprend en outre l'étape de modification d'un réglage de minuteur, et dans lequel le réglage de minuteur se rapporte à un réglage de la durée d'activation, à un réglage de minuteur d'inactivité et à un réglage de la durée active d'un mode de fonctionnement en réception discontinue dans un réseau de communication à évolution à long terme, LTE, ou à un réglage de minuteur d'inactivité d'un réseau de communication à accès multiple par répartition de code à large bande, WCDMA.

7. Procédé selon l'une quelconque des revendications 1 à 6, dans lequel l'étape d'adaptation (403) est mise en œuvre dynamiquement.

8. Élément de réseau pour configurer un réseau d'accès radio (5) pour un utilisateur, l'élément de réseau comprenant :
un moyen de surveillance pour surveiller (401) un flux de trafic associé à l'utilisateur ;
un moyen de détection pour détecter (402) un modèle temporel dans le flux de trafic surveillé, en mesurant le trafic dans l'élément de réseau qui termine une couche de protocole mettant en œuvre une machine d'état ;
un moyen de prédiction pour prédire, sur la base du modèle temporel détecté, des périodes futures d'activité et d'inactivité de l'utilisateur correspondant à une application ou à une combinaison de deux applications ou plus ; et
un moyen d'adaptation pour adapter (403) un paramètre de fonctionnement du réseau d'accès radio (5) sur la base des périodes futures prédites d'activité et d'inactivité de l'utilisateur, dans lequel le moyen d'adaptation adapte le paramètre de fonctionnement du réseau d'accès radio (5) en modifiant une valeur seuil du paramètre de fonctionnement dans le réseau d'accès radio (5) sur une base par utilisateur, pour permettre à un équipement utilisateur, UE (3), de basculer entre des premier et second états de commande de ressources radio, et dans lequel le moyen de détection, pour détecter (402) le modèle temporel dans le flux de trafic surveillé, est adapté pour détecter un modèle particulier comprenant des salves de charge de trafic dans le flux de trafic surveillé correspondant à la combinaison de deux applications ou plus, utilisées simultanément par l'utilisateur.

9. Élément de réseau selon la revendication 8, dans lequel le moyen de surveillance est adapté pour mesurer le flux de trafic dans le réseau d'accès radio (5), ou un agrégat de l'ensemble du trafic pour l'utilisateur.

10. Élément de réseau selon la revendication 8 ou 9, dans lequel le moyen de surveillance est adapté pour mesurer activement le flux de trafic en fonction d'une intensité d'un flux de paquets, d'un débit de pointe du flux de paquets et/ou d'une quantité de données dans un tampon, pendant une session de communication.

11. Élément de réseau selon l'une quelconque des revendications 8 à 10, dans lequel le moyen de détection est en outre adapté pour détecter une configuration périodique dans le flux de trafic surveillé.

12. Élément de réseau selon l'une quelconque des revendications 8 à 11, dans lequel le moyen d'adaptation est configuré pour adapter un réglage de minuteur du réseau d'accès radio (5), et dans lequel le réglage de minuteur se rapporte à un réglage de la durée d'activation, à un réglage de minuteur d'inactivité et à un réglage de la durée active d'un mode de fonctionnement en réception discontinue dans un réseau de communication à évolution à long terme, LTE, ou à un réglage de minuteur d'inactivité d'un réseau de communication à accès multiple par répartition de code à large bande, WCDMA.

13. Élément de réseau selon l'une quelconque des revendications 8 à 12, dans lequel l'élément de réseau est un contrôleur de réseau radio, RNC, du réseau de communication WCDMA ou un nœud B évolué, eNB, dans le réseau de communication LTE.

14. Système de communication (1) comprenant un élément de réseau selon l'une quelconque des revendications 8 à 13.
